# EUROPEAN PATENT SPECIFICATION

(11) **EP 3 825 135 B1**
(45) Date of publication and mention of the grant of the patent: **03.01.2024**
(21) Application number: 19383027.0
(22) Date of filing: 21.11.2019
(51) Int. Cl.: B41J 11/00, B65H 5/22

(54) **SUBSTRATE PRINTING SYSTEM**
SUBSTRATDRUCKSYSTEM
SYSTÈME D'IMPRESSION DE SUBSTRAT

(43) Date of publication of application: 26.05.2021
(73) Proprietor: Barberan Latorre, Jesús Francisco, 08860 Castelldefels (Barcelona) (ES)
(72) Inventor: Barberan Latorre, Jesús Francisco, 08860 Castelldefels (Barcelona) (ES)
(74) Representative: Plasseraud IP

(56) References cited:
- EP-A2- 1 642 728
- ES-A1- 2 310 490
- JP-A- 2007 031 007
- US-A1- 2002 109 768
- US-A1- 2010 171 804
- US-A1- 2010 171 804
- US-A1- 2010 276 868
- US-B1- 9 604 813

## Description

### Technical field

The object of the present invention is a substrate printing system, substrates for example laminar substrates, in particular strips, grills, sheets, plates, panels, etc. on a conveyor belt, especially a system adapted for an inkjet printing machine.

### State of the art

At present, inkjet printing machines have a transport system for transporting substrates to be printed by means of a perforated conveyor belt which moves forward supported and rubbing on one or some flat and static perforated metal grills. Said perforated grills are the upper closure of leak-tight chambers or lines, with some residual losses, on the rest of their surfaces.

In these chambers or lines, by means of suction elements, for example fans with radial impellers, air suction is generated which circulates through the perforations of these grills and in turn through the perforations of the conveyor belt.

The suction chambers or lines may be adjustable in width by means of moving lateral plates with vertical closures. Using these lateral plates, the perforations of the laterals of the perforated grill can be disabled, thus leaving open the perforations which correspond to the measurement in width of the substrate to be printed. That is to say, the perforated grills can be varied in width according to the different machines. Normal measurements are between 1560 mm and 2190 mm. By means of the lateral plates, it is possible to adjust this dimension in width to that of the substrate to be printed, leaving disabled the perforations which are not necessary in the laterals of the substrate to be printed.

In this way, the air flow through the perforations of the perforated conveyor belt is also adjusted in width as necessary.

The substrates on which printing will be carried out, when they are delivered to the conveyor belt, are secured to said conveyor belt because in the perforations of the conveyor belt which are covered by said substrate a vacuum is formed which exerts a suction force which fixes the substrate to the belt and allows it to advance at its rhythm without having relative movements between them.

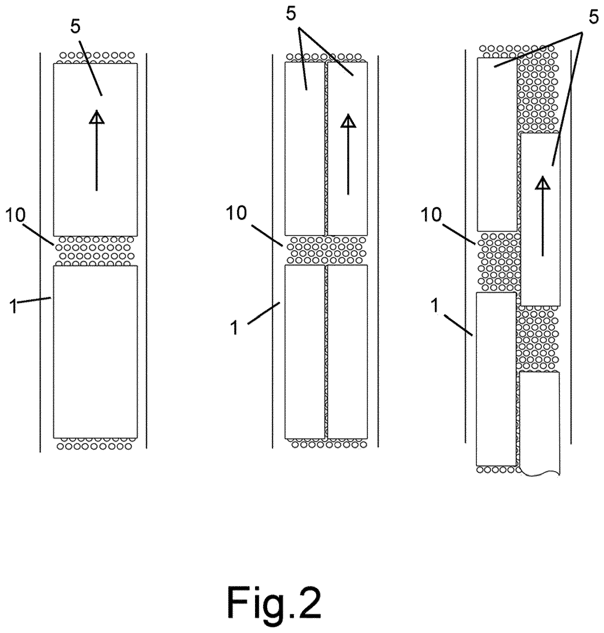

In Figure 2, different ways are shown in which the substrates can normally be delivered to the conveyor belt; they are the following:
- Delivery of single substrate (Figure 2, left). One substrate is delivered after another, leaving a gap between contiguous substrates. It is recommended that this gap is as small as possible.
- Delivery of a double paired substrate (Figure 2, centre). Two pieces of substrate are delivered in parallel and then another two and so on successively, leaving a gap between one delivery and the next one.
- Delivery of a double unpaired substrate (Figure 2, right). Two pieces of substrate parallel to one another, but which have a longitudinal divergence are delivered.

Laterally, the suction is adjusted, in any of these three cases, by means of the previously mentioned lateral plates.

In addition, the longitudinal central area of the perforated conveyor belt may not have perforations, thus, in the central area there is no suctioned air flow when double substrate printing is carried out.

However, in the direction of travel of the substrates, gaps are established between consecutive substrates which leave perforations of the perforated conveyor belt exposed, as they are not covered by said substrates. The number of perforations without covering is greater when we find ourselves in the case of double unpaired delivery.

A suction air flow circulates through these perforations. This air flow, in the area of the printing heads, and when printing is being carried out, produce undesired and uncontrollable effects. Some defects produced are the following:
- Turbulences are produced which are translated into print defects in the areas of the borders of the substrates, for example lack of ink, smudged prints, blurs, etc.
- Part of the ink injected in the limit areas of the substrates is pulled by the suction air flow and causes soiling by deposition, not only on the perforated conveyor belt, but also on the perforated metal grills, in the suction lines and in general in the circuit through which the suction air circulates.

The objective of the printing system object of the invention is to provide a system which reduces or eliminates the drawbacks caused by the suction air flow, improving the printing in the limit areas of the substrates and reducing the soiling due to suctioned ink.
Examples of prior art can be found, for instance, in the following documents: US 2010/171804 A1, US 9604813 B1, ES 2310490 A1, US 2002/109768 A1, JP 2007/031007 A, or US 2010/276868 A1. US-A1 -2002 109 768 discloses a device according to the preamble of claim 1 as granted.

### Object of the invention

The present invention relates to printing system of the type that comprises:
- A perforated conveyor belt adapted for transporting on the same a substrate to be printed, wherein the perforated conveyor belt comprises a set of perforations.
- A perforated grill which comprises a set of perforations and which is configured such that the perforated conveyor belt can be moved over the perforated grill.
- A suction chamber which comprises a suction element, the suction chamber being in communication with the perforated conveyor belt and with the perforated grill such that the suction flow created by the suction element is adapted for passing through perforations of the perforated conveyor belt and of the perforated grill to secure the substrate to the perforated conveyor belt.

It is conceived that the printing system according to the invention can have more than one suction chamber, for example each one with a suction element and with one or more perforated grills. Normally, more than one suction chamber is used, for example, three in order to be able to distribute the suction power required between the different chambers.

In a first aspect, the invention is characterised in that the perforations of the perforated grill have a different pattern in one area adapted for printing substrates than in an area not adapted for printing substrates.

In the context of the present invention, pattern of holes should be understood in particular as a distribution, shape and/or dimensions of the holes. Moreover, area adapted for printing substrates should be understood in particular as the area above which the printing heads are provided for printing the substrates when they are situated below the heads.

Providing a different pattern in the area to be printed makes it possible to minimise or reduce the problems mentioned in the printing, in relation to the suction air flow, by means of adjusting or distributing the securing force of the substrates to the belt in the printing area. In particular, the printing system can be adapted to different substrates or types of substrate, for example with different dimensions or weights, preventing or reducing the printing defects in the areas of the borders of the substrates to be printed.

Preferably, the perforations of the perforated grill are configured to produce greater blocking of the suction flow through said perforations in the area adapted for printing substrates than in the area not adapted for printing substrates.

In the context of the present invention, blocking a suction flow through a hole should be understood in particular as directly (at least partially) covering said hole to reduce or cancel out the suction flow through the hole, that is to say, to reduce or cancel out the area passed through by the suction flow in said hole. Thus, greater blocking should be understood in particular as the total area of said perforations passed through by the suction flow being lower, for example reducing the number of perforations or the area of each perforation.

Providing greater blocking enables the suction flow to be reduced (and a lower securing force of the substrate to the perforated conveyor belt). The reduction of the suction flow locally allows the adverse effects in printing caused by the suction flow, as explained above, to be reduced. In particular, the air flow around the substrates to be printed can be reduced to prevent turbulences in the ink and the suction of the ink together with the air flow through the perforations.

According to the invention, it is possible to reduce the total percentage of the suction surface, minimally affecting the fastening force of the substrate to the perforated conveyor belt.

Additionally, the perforated grill is removable in the area adapted for printing substrates with respect to the area not adapted for printing substrates.

In a second aspect of the invention, it is conceived that the perforated grill is removable in an area adapted for printing substrates with respect to an area not adapted for printing substrates. That is to say, independently of fact that the perforations of the perforated grill have a different pattern in one area adapted for printing substrates than in an area not adapted for printing substrates.

In the context of the present invention, removable perforated grill should be understood in particular as it can be removed and replaced in its position, maintaining the integrity of the system, in particular by means of non-permanent fastening means such a screws, interference fit, etc. At the same time, removable perforated grill should be understood as the printing system being configured so that the perforated grill can be changed, for example for cleaning, repair or maintenance of the system.

Unlike the printing systems of the state of the art wherein the perforated grill is connected to the rest of the structure of the suction chamber by means of soldering, according to the invention using the removable perforated grill it is possible to remove the sheet easily for cleaning the perforated grill and for carrying out the required maintenance as a result of soiling of the system produced by the printing ink when printing. At the same time, as it is possible to remove the removable perforated grill and accordingly leave the suction chamber open in the printing area, this allows access to the interior of the suction chamber to facilitate cleaning, repair and maintenance even in the interior.

Preferably, in relation to the second aspect of the invention, it is also envisaged that the perforations of the perforated grill have a different pattern in the area adapted for printing substrates than in the area not adapted for printing substrates.

Advantageously, the perforated grill can be replaced with another perforated grill with a pattern different from the previous one. In this way, a suitable pattern can be selected for printing different types of substrates, for example substrates with different dimensions, thicknesses, materials, etc. or in general different types of substrates whose features can influence the printing. In this sense, it can be observed that, for example, the distance of the printing heads to the surface to be printed of the substrate, the fastening force of the substrate, the distribution on the substrate of the surface to be printed, the type of printing to be carried out on the substrate, etc. can influence the printing.

In relation to the effect of the spacing of the printing heads to the surface to be printed of the substrate and to the conveyor belt, it can be observed that the shorter the distance of the heads to the substrate, the better the printing because the shooting trajectory of ink is more precise. However, the shorter the distance of the heads to the conveyor belt, the greater the influence of the turbulences of the suction air flow. Therefore, in general, when the thickness of the substrate reduces or the distance of the heads to the substrate reduces, the adverse effects of the suction air flow on the ink are greater.

Preferably, the perforations of the perforated grill are configured to produce greater blocking of the suction flow through said perforations in the area adapted for printing substrates than in the area not adapted for printing substrates. In this way, as previously explained, the suction flow can be reduced in the printing area and therefore, the printing improved.

In a third aspect of the invention, the system comprises blocking means to at least partially block the suction flow through perforations to a different extent in an area adapted for printing substrates than in an area not adapted for printing substrates.

According to the invention, it is envisaged that the means have the shape of, for example, valves or inserts for blocking the perforations in the area adapted for printing substrates.

Preferably, according to the invention, it is envisaged that the blocking means have the shape of a laminar blocking element which is arranged parallel to the perforated conveyor belt in the area adapted for printing substrates. The blocking means serve to block the suction flow through the holes or perforations, that is to say, directly (at least partially) cover said hole to reduce or cancel out the suction flow through the hole to reduce or cancel out the area passed through by the suction flow in said hole. In order to achieve greater blocking, the total area of the perforations passed through by the suction flow should be smaller.

It is conceived that the laminar blocking element extends in a plane parallel to the perforated conveyor belt. The blocking element can be formed, for example by a sheet, plate, strip or similar.

The laminar blocking element is preferably provided with a set of perforations for the passage of the suction air flow. The perforations of the laminar blocking element are more preferably configured to produce greater blocking of the suction flow through the perforations of the conveyor belt, the perforated sheet and the laminar blocking element, in the area adapted for printing substrates than in the area not adapted for printing substrates. In particular, the perforations of the laminar blocking element have a pattern different from that of the perforations in the perforated grill.

Alternatively or complementarily, the laminar blocking element is permeable to the suction flow in an area of said element which does not have perforations.

According to the invention, it is also envisaged that the laminar blocking element can be disposable once printing is completed or replaceable every now and then. In this way, it is also possible to solve the technical problem of the invention without the need to introduce or modify constructive elements in the printing machine by way of which the printing system can be simplified.

In one possible embodiment, the laminar blocking element is fixed on the perforated grill in contact therewith. In particular, the laminar blocking element is fixed to the perforated grill in a housing of the perforated grill and flush with the same on the surface external to the suction chamber.

In another possible embodiment, the laminar blocking element is arranged stationary on the perforated conveyor belt, between substrate and perforated conveyor belt.

The blocking means are removable with respect to the perforated conveyor belt and/or the perforated grill. In this way, the cleaning, repair or maintenance thereof is facilitated or the use thereof is simplified in the case of being able to be substituted, replaced or disposed of.

The blocking means are preferably configured to block at least partially the perforations of the perforated conveyor belt and/or the perforated grill which are not adapted for being covered by the substrate. In this way, the blocking is concentrated in the areas not covered by the substrates to be printed, in the gaps around the same.

The printing system according to the invention can be used, as previously described, to print different substrates or types of substrate, for example with different dimensions, thicknesses or weights. For example, it is possible to provide printing systems with different patterns in the printing area for printing one predetermined type of substrate, or to provide removable perforated sheets with different patterns of perforations or blocking means, in particular laminar blocking elements with different patterns of perforations, as a function of the different types of substrates to be printed.

Advantageously, the invention makes it possible for the reduction of the flow around the substrate to preferably be carried out in the printing area, without the suction in the rest of the perforated conveyor belt being impaired.

### Description of the figures

In order to complete the description and with the aim of providing a better understanding of the invention, some figures are provided. Said figures form an integral part of the description and illustrate an exemplary embodiment of the invention.
Figure 1 shows a transversal schematic view of a printing machine of the type to which the invention is applied.
Figure 2 shows a schematic plan view of three exemplary embodiments for supplying a substrate on a perforated conveyor belt.
Figure 3 shows a lateral schematic section to the perforated conveyor belt, of the perforated grill and to the suction chamber of an exemplary embodiment of the invention.
Figures 4a, 4b show a schematic plan view of the perforated grill according to respective embodiments according to the invention.
Figure 5 shows a schematic plan view of the conveyor belt on which a laminar blocking element is arranged between a substrate to be printed and the conveyor belt according to an embodiment of the invention.
Figure 6 shows different embodiments of laminar blocking elements according to the invention.

### Detailed description of the invention

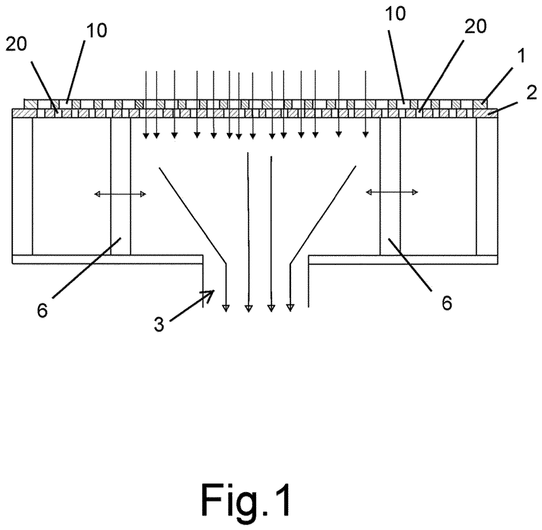

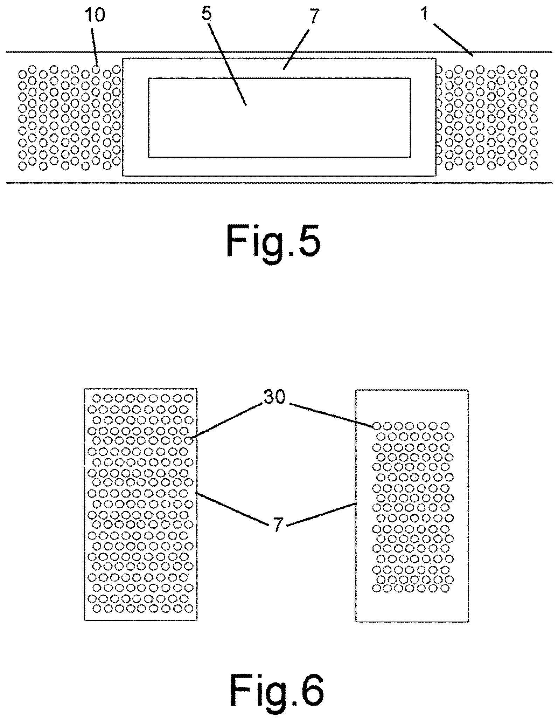

An exemplary embodiment of a printing machine according to the invention is represented in Figure 1, comprising:
- The perforated conveyor belt (1) which is mobile and transports on the same the substrate (5) to be printed. Accordingly, the perforated conveyor belt (1) is represented in Figures 2 and 5, comprising a set of perforations (10).
- The perforated grill (2) which is static and which, in the exemplary embodiment, is also metal. The perforated conveyor belt (1) is moved over said perforated grill (2). The perforated grill (2) comprises a set of perforations (20).
- The suction chamber (3), represented in Figure 1, comprises a suction element (not represented) which creates a suction flow which passes through the perforations (10, 20) of the perforated conveyor belt (1) and of the perforated grill (2) to secure the substrate (5) to the perforated conveyor belt (1).

The solution of the state of the art relating to the vertical lateral plates (6) of the suction chamber is also represented in Figure 1 which may be adjustable in width by means of moving the same (6). Using these lateral plates (6), the perforations (20) of the laterals of the perforated grill (2) can be disabled, to a greater or lesser extent, thus leaving open the perforations (20) which correspond to the measurement in width of the substrate (5) to be printed.

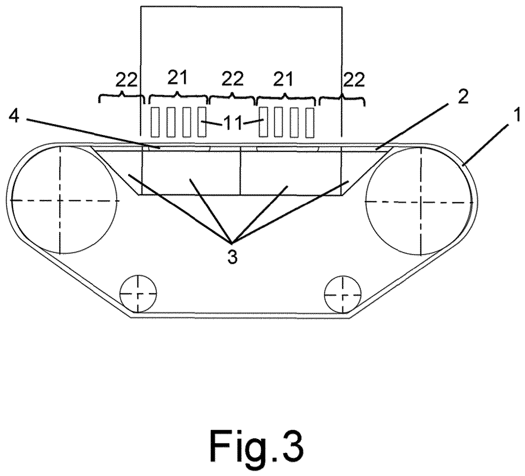

In the exemplary embodiment according to the invention corresponding to Figure 3, an area (21) is shown adapted for printing and an area (22) not adapted for printing. In the area (21) adapted for printing, the printing heads (11) are arranged over the conveyor belt (1) for printing the substrates (5) while they advance with the movement of the conveyor belt (1) below the printing heads (11). The different areas (21) adapted for printing can be for printing different colours. According to the embodiment shown, both in the printing area (21) and in the area (22) where there is no printing, the securing of the substrates (5) is caused by the suction air flow which passes through the conveyor belt (1) and the perforated grill (2) when being suctioned by the suction elements of the suction chambers (3).

The perforated grill (2) shown in the embodiment of Figure 3 is removable (4) in each one of the two suction areas (21) according to the embodiment, allowing it, for example, to be removed and substituted with other perforated grills (2) for the cleaning, repair or maintenance thereof and access to the suction chambers (3) once removed.

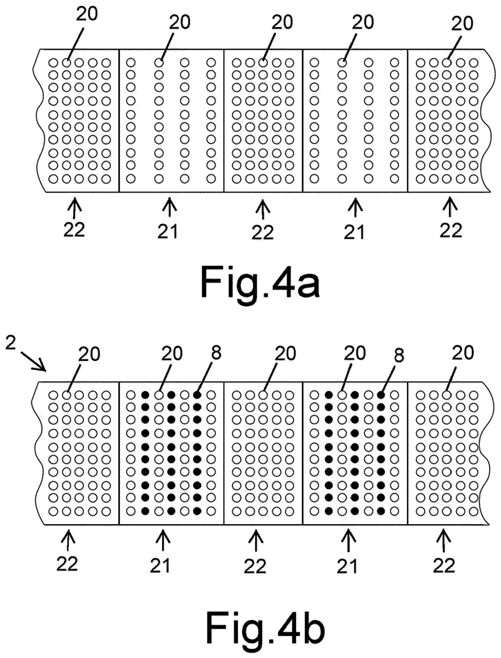

In Figures 4a and 4b, embodiments are shown of the perforated sheet (2) according to the invention wherein the perforations (20) in the printing area (21) have a pattern different from the perforations (20) in the area (22) where there is no printing, in this case to produce greater blocking (fewer number of holes which can be open to the passage of the suction air flow) in the printing area (21) than in the area (22) where there is no printing. The difference between both embodiments of Figures 4a and 4b is that in the embodiment of Figure 4b, the blocking is caused by means of blocking valves or inserts (8) arranged in the perforations shown for completely blocking each one of said perforations (20). The perforated grill (2) is preferably removable in the printing areas (21).

The perforated conveyor belt (1) is moved on the optionally removable perforated grill (2), leaving some of the perforations (10) of the perforated conveyor belt (1) blocked by the perforated grill (2) itself. In this way, the perforations (10) of the perforated conveyor belt (1) which are not adapted for being covered by the substrate (5) are blocked at least partially by the perforated grill (2).

One of the advantages of implementing removable (4) perforated metal grills (2) is that the cleaning thereof is facilitated and at the same time it also facilitates the cleaning of the housing thereof in the printing areas (21). To this end, the perforated grill (2) can be removably fixed, in particular screwed or similar or simply supported or superimposed on the suction chamber (3). When the removable perforated grills (2) are removed, disassembling them from the upper part of their support structure in the manner of a drawer of the suction chamber (3), access to the suction chamber (3) is also enabled for its cleaning.

To achieve a maximum reduction of the perforations (10) of the perforated conveyor belt (1) which are uncovered, the distribution pattern of the perforations (20) of the removable perforated grill (2) can be contemplated as a function of the different substrates (5) to be printed, in particular of the measurements and features of the substrate (5) to be printed and how the substrates (5) are going to be placed on the perforated conveyor belt (1).

In another exemplary embodiment, the blocking means can be formed by a laminar blocking element (7) parallel to the perforated conveyor belt (1) which is located on the perforated grill (2) and therefore below the perforated conveyor belt (1) in the printing area (21).

Specifically, in this embodiment, the laminar blocking element (7) comprises an additional perforated grill with a set of perforations different from the distribution pattern of the perforated grill (2) in an area (22) where there is no printing, the additional perforated grill (4) being located between the perforated grill (2) and the perforated conveyor belt (1). More specifically, the perforated grill (2) comprises a housing with a determined thickness, for inserting the additional perforated grill. The additional perforated grill (4) will preferably be metal and easy to remove.

The additional perforated grill comprises a perforation distribution pattern which differs from the distribution pattern of the perforations (20) of the perforated grill (2), such that perforations (10) of the perforated conveyor belt (1) which are not adapted for being covered by the substrate (5) are blocked at least partially by the additional perforated grill, preventing or at least minimising the previously indicated problems.

The perforations of the additional perforated grills can be implemented as a function of:
- The measurements and features of the substrate (5) to be printed.
- How the substrates (5) are going to be placed on the perforated conveyor belt (1).

It has also been anticipated that different sets of additional perforated grills can be provided. In this way, either are selected as a function of the features of the laminar substrate (5) and how they are going to be placed on the perforated conveyor belt (1).

As mentioned for the previous exemplary embodiment, the removable condition of these additional perforated grills facilitates their cleaning, removing them from their housings in the perforated grill (2) and thus being taken to a cleaning point.

Another exemplary embodiment is represented in Figure 5 in which the blocking means are formed by a laminar blocking element (7) parallel to the perforated conveyor belt (1) which travels on the conveyor belt (1) and below the substrate (5). When the laminar blocking element (7) arrives to the printing area (21) with the substrate (5) arranged on the laminar blocking element (7), the blocking of the perforations (10) of the conveyor belt (1) is caused in the printing area (21) with respect to the area (22) where there is no printing.

Two embodiments of laminar blocking elements (7) are shown in Figure 6 configured for being arranged on the conveyor belt (1). In the embodiment on the left, the laminar blocking element presents a set of perforations (30) with a determined pattern on its entire surface. In the embodiment on the right, the laminar blocking element presents a border area without perforations such that in said area the perforations (10) of the conveyor belt (1) are completely blocked, preventing the printing problems of the suction air flow in said border area.

An exemplary embodiment is also envisaged consisting of a permeable strip, for example porous, to the suction flow in an area of the laminar blocking element (7) without perforations (30). In this way, the laminar element allows the passage of suction flow in said permeable area, but reducing the turbulences created by said flow.

It is envisaged that the laminar blocking element (7) can be disposable such that it could be introduced with the substrate (5) on the perforated conveyor belt (1) and removed with the printed substrate (5) at the end of the process. One problem is that as the strip (7) would travel below the substrate (5) for the entire route of the perforated conveyor belt (1), the vacuum would reduce on its entire journey, not only in the printing area. However, it has the advantage of being able to adapt the suction to the type of substrate (5), a type of strip or pattern being selected for each substrate (5).

The following possible exemplary embodiments are envisaged:
- Replacing the entire welded upper grill of the suction cavity in the printing area with an upper sheet grill with removable fixing, such as for example screwing.
- Recess or housing in the welded upper grill to insert in the same an additional perforated grill in the recess.
- Superimposing the additional perforated grill on the conventional welded upper grill.
- Strip which travels on the conveyor belt (1) between the substrates and the conveyor belt (1).

## Claims

1. A substrate printing system, comprising
a perforated conveyor belt (1) adapted for transporting on the same a substrate (5) to be printed, wherein the perforated conveyor belt (1) comprises a set of perforations (10),
a perforated grill (2) which comprises a set of perforations (20) and which is configured such that the perforated conveyor belt (1) can be moved over the perforated grill (2),
a suction chamber (3) which comprises a suction element, the suction chamber (3) being in communication with the perforated conveyor belt (1) and with the perforated grill (2) such that the suction flow created by the suction element is adapted for passing through perforations (10, 20) of the perforated conveyor belt (1) and of the perforated grill (2) to secure the substrate (5) to the perforated conveyor belt (1),
the perforations (20) of the perforated grill (2) have a different pattern in an area (21) adapted for printing substrates (5) than in an area (22) not adapted for printing substrates (5) along a movement direction of the perforated conveyor belt (1) over the perforated grill (2), or
the system comprises blocking means (7, 8) for blocking perforations (20) of the perforated grill (2),
wherein said different pattern of the perforations (20) or the blocking means (7, 8) are configured to at least partially block the suction flow through perforations (10, 20) to a greater extent in the area (21) adapted for printing substrates (5) than in the area (22) not adapted for printing substrates (5) along said movement direction,
**characterised in that** the perforated grill (2) is removable (4) in the area (21) adapted for printing substrates (5) with respect to the area (22) not adapted for printing substrates (5), or
**in that** the blocking means (7, 8) are removable with respect to the perforated conveyor belt (1) and/or the perforated grill (2).

2. The substrate printing system according to claim 1, wherein the perforations (20) have different distribution, shape and/or dimensions in an area (21) adapted for printing substrates (5) than in an area (22) not adapted for printing substrates (5).

3. The substrate printing system according to claim 1, wherein the blocking means comprise blocking valves or inserts (8) of the perforations (20) in the area (21) adapted for printing substrates (5).

4. The substrate printing system according to claim 1, wherein the blocking means comprise a laminar blocking element (7) which is arranged parallel to the perforated conveyor belt (1) in the area (21) adapted for printing substrates (5).

5. The substrate printing system according to claim 4, wherein the laminar blocking element (7) is provided with a set of perforations (30).

## Patentansprüche

1. System zum Bedrucken von Substraten, das aufweist:
ein perforiertes Förderband (1), das zum Transportieren eines zu bedruckenden Substrats (5) darauf geeignet ist, wobei das perforierte Förderband (1) einen Satz von Perforationen (10) aufweist,
einen perforierten Grill (2), der einen Satz von Perforationen (20) aufweist und der so konfiguriert ist, dass das perforierte Förderband (1) über dem perforierten Grill (2) bewegt werden kann,
eine Ansaugkammer (3), die ein Ansaugelement aufweist, wobei die Ansaugkammer (3) in Kommunikation mit dem perforierten Förderband (1) und mit dem perforierten Grill (2) steht, so dass die durch das Ansaugelement erzeugte Ansaugströmung zum Durchlaufen von Perforationen (10, 20) des perforierten Förderbands (1) und des perforierten Grills (2) geeignet ist, um das Substrat (5) am perforierten Förderband (1) zu befestigen,
wobei die Perforationen (20) des perforierten Grills (2) ein unterschiedliches Muster in einem zum Bedrucken von Substraten (5) geeigneten Bereich (21) als in einem zum Bedrucken von Substraten (5) ungeeigneten Bereich (22) entlang einer Bewegungsrichtung des perforierten Förderbands (1) über dem perforierten Grill (2) haben oder
das System Blockiereinrichtungen (7, 8) zum Blockieren von Perforationen (20) des perforierten Grills (2) aufweist,
wobei das unterschiedliche Muster der Perforationen (20) oder die Blockiereinrichtungen (7, 8) so konfiguriert sind, dass sie die Ansaugströmung durch Perforationen (10, 20) hindurch stärker in dem zum Bedrucken von Substraten (5) geeigneten Bereich (21) als in dem zum Bedrucken von Substraten (5) ungeeigneten Bereich (22) entlang der Bewegungsrichtung zumindest teilweise blockieren,
**dadurch gekennzeichnet, dass** der perforierte Grill (2) in dem zum Bedrucken von Substraten (5) geeigneten Bereich (21) im Hinblick auf den zum Bedrucken von Substraten (5) ungeeigneten Bereich (22) entfernbar (4) ist, oder
dadurch, dass die Blockiereinrichtungen (7, 8) im Hinblick auf das perforierte Förderband (1) und/oder den perforierten Grill (2) entfernbar sind.

2. System zum Bedrucken von Substraten nach Anspruch 1, wobei die Perforationen (20) unterschiedliche Verteilung, Form und/oder Abmessungen in einem zum Bedrucken von Substraten (5) geeigneten Bereich (21) als in einem zum Bedrucken von Substraten (5) ungeeigneten Bereich (22) haben.

3. System zum Bedrucken von Substraten nach Anspruch 1, wobei die Blockiereinrichtungen Absperrventile oder Einsätze (8) der Perforationen (20) in dem zum Bedrucken von Substraten (5) geeigneten Bereich (21) aufweisen.

4. System zum Bedrucken von Substraten nach Anspruch 1, wobei die Blockiereinrichtungen ein laminares Blockierelement (7) aufweisen, das parallel zum perforierten Förderband (1) in dem zum Bedrucken von Substraten (5) geeigneten Bereich (21) angeordnet ist.

5. System zum Bedrucken von Substraten nach Anspruch 4, wobei das laminare Blockierelement (7) mit einem Satz von Perforationen (30) versehen ist.

## Revendications

1. Système d'impression de substrat, comprenant
une bande transporteuse perforée (1) adaptée pour transporter sur celle-ci un substrat (5) à imprimer, dans lequel la bande transporteuse perforée (1) comprend un ensemble de perforations (10),
une grille perforée (2) qui comprend un ensemble de perforations (20) et qui est configurée de sorte que la bande transporteuse perforée (1) puisse être déplacée sur la grille perforée (2),
une chambre d'aspiration (3) qui comprend un élément d'aspiration, la chambre d'aspiration (3) étant en communication avec la bande transporteuse perforée (1) et avec la grille perforée (2) de sorte que le flux d'aspiration créé par l'élément d'aspiration soit adapté pour traverser les perforations (10, 20) de la bande transporteuse perforée (1) et de la grille perforée (2) pour fixer le substrat (5) à la bande transporteuse perforée (1),
les perforations (20) de la grille perforée (2) présentent un motif différent dans une zone (21) adaptée pour des substrats d'impression (5) que dans une zone (22) non adaptée pour imprimer des substrats (5) le long d'une direction de mouvement de la bande transporteuse perforée (1) sur la grille perforée (2), ou
le système comprend des moyens de blocage (7, 8) pour bloquer les perforations (20) de la grille perforée (2),
dans lequel ledit motif différent des perforations (20) ou les moyens de blocage (7, 8) sont configurés pour bloquer au moins partiellement le flux d'aspiration à travers les perforations (10, 20) davantage dans la zone (21) adaptée pour imprimer des substrats (5) que dans la zone (22) non adaptée pour imprimer des substrats (5) le long de ladite direction de mouvement,
**caractérisé en ce que** la grille perforée (2) est amovible (4) dans la zone (21) adaptée pour imprimer des substrats (5) par rapport à la zone (22) non adaptée pour imprimer des substrats (5), ou
**en ce que** les moyens de blocage (7, 8) sont amovibles par rapport à la bande de transporteuse perforée (1) et/ou la grille perforée (2).

2. Système d'impression de substrat selon la revendication 1, dans lequel les perforations (20) ont différentes répartition, forme et/ou dimensions dans une zone (21) adaptée pour imprimer des substrats (5) que dans une zone (22) non adaptée pour imprimer des substrats (5).

3. Système d'impression de substrat selon la revendication 1, dans lequel les moyens de blocage comprennent des valves de blocage ou des inserts (8) des perforations (20) dans la zone (21) adaptée pour imprimer des substrats (5).

4. Système d'impression de substrat selon la revendication 1, dans lequel les moyens de blocage comprennent un élément de blocage laminaire (7) qui est disposé parallèlement à la bande transporteuse perforée (1) dans la zone (21) adaptée pour imprimer des substrats (5).

5. Système d'impression de substrat selon la revendication 4, dans lequel l'élément de blocage laminaire (7) est doté d'un ensemble de perforations (30).
